# EUROPEAN PATENT APPLICATION

(11) **EP 4 340 173 A1**
(43) Date of publication of application: **20.03.2024**
(21) Application number: 22807434.0
(22) Date of filing: 09.05.2022
(51) Int. Cl.: H02J 15/00, F03D 9/11

(54) **SYSTEM AND METHOD FOR TRANSPORTING ENERGY BY SHIP**

(30) Priority: 10.05.2021 JP 2021080079
(71) Applicant: Powerx, Inc., Tokyo, 107-6243 (JP)
(72) Inventor: ITO Masahiro, Tokyo 107-6243 (JP)
(74) Representative: Peters, Sebastian Martinus
(86) International application number: PCT/JP2022/019669
(87) International publication number: WO 2022/239733

(57) **Abstract**

[Problem] To efficiently transport an energy source such as electricity from a power generation facility to a reception facility without using a power transmission cable.

[Solution] An energy transportation system 100 comprises: a transportation ship 10 provided with a holding means for an energy source; a power generation facility 20 that supplies the energy source to the holding means of the transportation ship 10; and a reception facility 30 that receives the energy source supplied from the holding means of the transportation ship 10. Examples of the energy source held in the holding means of the transportation ship 10 include electricity and hydrogen.

## Description

### TECHNICAL FIELD

The present invention relates to a system and method for transporting energy from a power generation facility to a reception facility along a sea route by a ship.

### BACKGROUND ART

In recent years, offshore wind power generation has been attracting attention from the perspective of ensuring a stable supply of electricity from renewable energy. Offshore wind power generation is said to be able to generate electricity efficiently and stably because the wind is stronger offshore than onshore, there are no obstacles and stable winds can be obtained. In addition, since a power generator can be installed offshore away from human habitation, noise problems are less likely to occur, and large wind turbines with higher power generation efficiency can be installed.

Conventionally, in an offshore wind power generation system, a power transmission cable is laid on the ocean floor or under the sea, and electricity generated by an offshore power generator is transmitted to an onshore power system via the undersea power transmission cable. For example, Patent Literature 1 discloses a wiring system in which a power transmission line is installed in a floating state between a plurality of offshore wind power generation facilities in order to lay the power transmission line regardless of the topography of the ocean floor. In addition, Patent Literature 2 discloses that in order to stably supply power generated by offshore wind power generation nationwide, a ring-shaped power transportation network is provided surrounding the land and connecting offshore wind power generation facilities, and discloses that this power transportation network system includes power transmission lines from an offshore transportation network to land.

### CITED LITERATURE

### PATENT LITERATURE

Patent Literature 1: JP 2014-093902 A
Patent Literature 2: JP 2014-158363 A
Patent Literature 3: JP 2013-509522 A

### SUMMARY OF INVENTION

### TECHNICAL PROBLEM

Incidentally, in conventional systems, a power transmission cable is installed on the ocean floor or under the sea in order to transmit electricity generated by an offshore wind power generation facility to a reception facility onshore, and electricity is transported by this power transmission cable. However, in addition to the time-consuming and costly installation and maintenance of power transmission cables, such conventional systems have the following various problems.

For example, in a case where power transmission cables are used, the installation locations of wind power generation facilities are restricted to locations near the coast. There are locations near the coast where sufficient wind power cannot be obtained stably, reducing the power generation efficiency of wind power generation. In addition, in many cases there are residential and fishing areas near the coast, and it may be difficult to obtain the consent and understanding of surrounding residents for the installation of a wind power generation facility.

In addition, In order to install power transmission cables, for example, procedures for obtaining permission from the national or local government are required, and since the installation work takes time, it takes a lot of time until the wind power generation facility starts operating.

Moreover, in a case where a power transmission cable is installed, there is a risk of affecting the natural environment in the sea or on the ocean floor, and thus care must be taken when installing the power transmission cable, and depending on the environmental conditions, there are cases in which it may not be possible to install a power transmission cable.

Furthermore, since power transmission cables are fixed on the ocean floor or under the sea, there are no options for where to transmit electricity from offshore wind power generation facilities. In other words, offshore wind power generation facilities can only directly transmit power to certain reception facilities at any given time. Therefore, in order to transmit power from a wind power generation facility to any arbitrary location, it is always necessary to go through an onshore power system, which poses a problem of poor power transmission efficiency.

In addition, it is difficult to install storage batteries in offshore wind power generation facilities due to installation, maintenance, and replacement costs, and even if installation were possible, the storage batteries will only be small-sized storage batteries. Therefore, in the case of offshore wind power generation, it is generally necessary to decide a destination for selling the electricity almost at the same time as the power generation. For example, in a case where electricity is generated in a time period or in an area with low demand for electrical power, there is a problem in that the profits gained from selling the electricity will be reduced.

On the other hand, Patent Literature 3 discloses an offshore wind power generation facility provided with a removable battery unit. This Patent Literature 3 proposes that a battery unit of a wind power generation facility be removed by a crane and installed on a ship, and that electricity supplied from the battery unit be used for drive energy of the ship or energy for equipment use. However, Patent Literature 3 merely proposes consuming electricity generated by a wind power generation facility on a ship, and does not disclose a method or system for transporting electricity generated by a wind power generation facility to land.

Therefore, a main object of the present invention is to provide a method for efficiently transporting an energy source such as electricity from a power generation facility to a reception facility without using a supply line such as an ocean floor power transmission cable.

### SOLUTION TO PROBLEM

As a result of intensive study on means for solving the problems of the known art, the inventor of the present invention has obtained knowledge that various problems faced by energy transportation methods using power transmission cables and the like can be solved by transporting energy by a ship along a sea route from a power generation facility to a reception facility. Based on the above knowledge, the present inventor came up with an idea that the problems of the prior art could be solved, and completed the present invention. More specifically, the present invention has the following configurations or steps.

A first aspect of the present invention relates to an energy transportation system. The system according to the present invention basically includes: a transportation ship provided with holding means for holding an energy source; a power generation facility located outside the transportation ship and configured to supply an energy source to the holding means of the transportation ship; and a reception facility located outside the transportation ship and configured to receive a supply of an energy source from the holding means of the transportation ship.

In the present invention, the "energy source" includes in addition to electricity, energy sources that are compatible with electricity. For example, in addition to electricity, energy sources include hydrogen, heat, potential energy, kinetic energy, and the like that are compatible with electricity and can be maintained for a certain period of time at a practical operational efficiency. Note that the energy source supplied from the power generation facility to the transportation ship and the energy source supplied from the transportation ship to the reception facility do not necessarily have to be of the same type. For example, hydrogen may be supplied from a power generation facility to a transportation ship, electricity may be generated from the hydrogen on the transportation ship, and electricity may be supplied from the transportation ship to a reception facility. The "power generation facility" is not limited to wind power generation, and equipment that generates power by known methods such as solar power generation, tidal power generation, geothermal power generation, hydropower generation, biomass power generation, thermal power generation, and nuclear power generation may also be employed. In addition, although it is preferable that the power generation facility be an offshore facility, the power generation facility may be provided at an onshore location such as a remote island or a coastal location where an energy source can be directly or indirectly supplied to an offshore transportation ship. Note that the power generation facility includes various equipment necessary for supplying an energy source to a transportation ship, such as a power generator, a power transformer, power transmission equipment, power storage equipment, and energy source conversion equipment. The "reception facility" is a facility that is capable of receiving an energy source from a transportation ship, and includes onshore facilities as well as ships, vehicles, trains, aircraft, and the like that are driven by an energy source supplied from a transportation ship. For example, in a case of electricity as an energy source, a power transformer that transmits electricity supplied from a transportation ship to a public power system corresponds to a reception facility referred to here.

By transporting energy by a transportation ship along a sea route from the power generation facility to the reception facility as in the above configuration, there are advantages as described below.

First, according to the present invention, restrictions on the installation location of the power generation facility can be relaxed. For example, offshore wind power generation facilities can be installed far from land in locations with better wind conditions, increasing the efficiency and stability of power generation.

In addition, with the present invention, there is no need to lay power transmission cables on the ocean floor as in the past, so the initial investment for starting wind power generation can be suppressed. In addition, the period until a wind power generation facility can begin operating can be shortened.

Moreover, the present invention does not require an ocean floor power transmission cable, and thus the influence on the natural environment under the sea or on the ocean floor can be minimized.

Furthermore, in the present invention, the energy source is transported according to the transportation destination rather than the power transmission cable, and thus the destination for energy transportation from the power generation facility can be freely selected. For example, it is possible to directly transport energy sources from offshore power generation facilities to areas with high electricity demand, commercial facilities, hospitals, public facilities, and the like.

In the present invention, holding means for holding an energy source is installed on the transportation ship, and thus timing at the electricity sales destination can be selected with some degree of freedom. For example, the unit sales price of an energy source can be increased by sending transportation ships to areas with high demand for electricity during times of high demand.

In the energy transportation system according to the present invention, the holding means of the transportation ship may be a storage battery (secondary battery). In this case, the electricity obtained by the power generation facility is supplied directly to the transportation ship after being transformed (voltage conversion and/or mutual conversion between direct current and alternating current) as necessary. "Storage batteries" include liquid batteries and all-solid-state batteries that convert electrical energy into chemical energy and store the energy, as well as mechanical batteries such as flywheel batteries and the like that convert electrical energy into physical energy such as rotational motion and store the energy. Mechanical batteries, when compared to liquid batteries, and the like, have an advantage in that the energy storage method is not a chemical reaction, so there is less risk of fire or explosion, and the lifespan thereof is longer than normal lithium batteries.

In the energy transportation system according to the present invention, the holding means of the transportation ship may be a hydrogen tank. In that case, hydrogen gas is generated by water electrolysis equipment or the like using electricity obtained from the power generation facility, and the obtained hydrogen gas is supplied to the hydrogen tank of the transportation ship. In addition, hydrogen gas will be supplied from the transportation ship to the reception facility, where the hydrogen gas will be used to generate electricity using fuel cells, or the like. Note that the water electrolysis equipment may be provided at the power generation facility or may be provided on the transportation ship. Moreover, the fuel cell may be provided at the reception facility or may be provided on the transportation ship.

In the energy transportation system according to the present invention, the power generation facility is preferably located offshore. By locating the power generation facility offshore, wind power generation, for example, can be stably and efficiently generated. In addition, doing so will not affect coastal residential areas or fishing areas.

In the energy transportation system according to the present invention, preferably the transportation ship is configured to be able to receive an energy source from an offshore power generation facility via a cable while offshore. In this way, by connecting the offshore power generation facility and the offshore transportation ship with a cable and supplying the energy source while the transportation ship is moored near the power generation facility, there is no need, for example, to reload holding means (storage batteries or hydrogen tanks). As a result, it becomes possible to efficiently supply an energy source from the power generation facility to the transportation ship.

In the energy transportation system according to the present invention, the power generation facility may be located onshore, such as on a remote island or on a coast. For example, remote islands with good wind conditions may also be used as locations for locating a power generation facility. Moreover, it is also possible to incorporate an existing onshore power generation facility into the system of the present invention. Similarly, a reception facility may also be located onshore, such as on a remote island or on a coast. For example, electricity generated on a remote island can be transported by a transportation ship to land on a main island where demand is high, or electricity generated on land on a main island can be transported to a remote island by a transportation ship.

In the energy transportation system according to the present invention, preferably the transportation ship is configured to be able to supply an energy source to an onshore reception facility via a cable while offshore. In this way, by connecting an onshore reception facility and an offshore transportation ship with a cable and supplying an energy source while the transportation ship is moored at a port near the reception facility, there is no need, for example, to reload holding means (storage batteries or hydrogen tanks). As a result, it is possible to efficiently supply an energy source from a transportation ship to a reception facility.

In the energy transportation system according to the present invention, the reception facility may be a ship capable of navigating using an energy source supplied from a transportation ship as a power source. For example, the system allows other ships to navigate with the supply of an energy source from a transportation ship. Examples of other ships mentioned here are motor ships powered by electricity as a power source and fuel cell ships powered by hydrogen as a power source. Thus, other ships can efficiently receive a supply of energy from a transportation ship at sea without having to stop at a port. Note that it is also possible to supply an energy source from a transportation ship provided with holding means to another transportation ship also provided with holding means. In this case, another transportation ship referred to here corresponds to a reception facility.

In the energy transportation system according to the present invention, the holding means may be configured to be removable from the transportation ship. In this case, for example, after a transportation ship has arrived at a port, the holding means can also be unloaded at the port by means of a crane or the like, rather than supplying energy to a reception facility. In addition, holding means removed from a transportation ship may be transported overland by truck, train, or the like. As a result, it is possible to individually deliver energy sources to, for example, rural areas, mountains, forests, construction sites, and the like where power transmission lines are not installed. Moreover, it also becomes possible to supply energy sources to areas where the power system is weak. Holding means unloaded at a port may also be stored as a backup power source. Furthermore, in a case where holding means (battery, etc.) of a transportation ship is removable, the holding means can be transferred from the transportation ship to another ship.

A second aspect of the invention relates to an energy transportation method. In the transportation method according to the present invention, an energy source is transported by a transportation ship provided with an energy source holding means from a power generation facility outside the transportation ship to a reception facility outside the transportation ship. For example, the transportation method according to the present invention includes a step of generating an energy source by a power generation facility, a step of supplying an energy source from the power generation facility to a transportation ship, a step of transporting an energy source by the transportation ship, and a step of supplying an energy source to a reception facility from the transportation ship.

### EFFECTS OF INVENTION

With the present invention, an energy source such as electricity can be efficiently transported from a power generation facility to a reception facility without using a supply line such as a power transmission cable.

### BRIEF DESCRIPTION OF DRAWINGS

FIG. 1 illustrates an overview of an energy transportation system according to the present invention, using electricity transportation as an example.
FIG. 2 is a block diagram illustrating an example of main components of a transportation ship.
FIG. 3 schematically illustrates examples of a method of electrical charging of a transportation ship from an offshore wind power generation facility.
FIG. 4 schematically illustrates examples of a method of electrical discharge from a transportation ship to a reception facility.
FIG. 5 schematically illustrates an example of how to remove a container from a transportation ship.
FIG. 6 illustrates two examples of power transmission schemes from a power generator to a power system.
FIG. 7 is a block diagram illustrating an application example of an energy transportation system. In particular, FIG. 7 illustrates a method of transporting hydrogen by a transportation ship, either as an alternative to or in combination with electricity.

### DESCRIPTION OF EMBODIMENTS

Hereinafter, embodiments for implementing the present invention are demonstrated using the drawings. The present invention is not limited to the embodiments described below, but also includes embodiments that are appropriately modified from the embodiments described below within a range that would be obvious to a person skilled in the art.

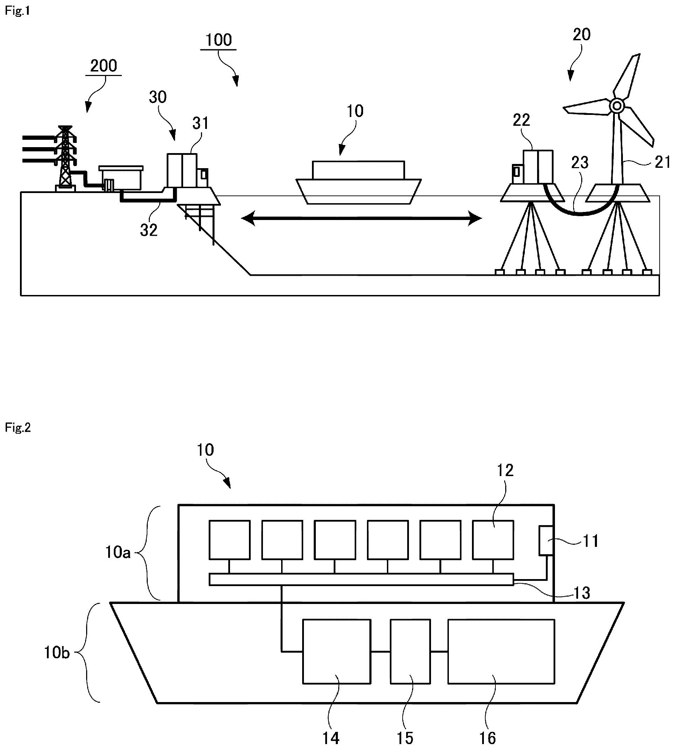

FIG. 1 illustrates an embodiment of an energy transportation system and an energy transportation method according to the present invention. In an energy transportation system 100 according to the embodiment illustrated in FIG. 1, electricity is transported by a transportation ship 10 via a sea route from a power generation facility 20 that is offshore to a reception facility 30 that is onshore. First, an overview of the present invention will be described with reference to FIG. 1.

As illustrated in FIG. 1, in the power generation facility 20, one or more floating wind power generators 21 are connected to a power transformer 22 by an array cable 23. For example, alternating current (AC) electricity generated by the wind power generator 21 is converted into direct current (DC) electricity by the power transformer 22. In addition, when the transportation ship 10 arrives near the power generation facility 20, the DC electricity converted by the power transformer 22 is supplied to a storage battery (energy source holding means) provided in the transportation ship 10 via a charging cable. In this way, it is preferable that electricity be supplied to the transportation ship 10 offshore via a cable. Further, the transportation ship 10, the storage battery of which has finished being electrically charged, navigates toward a predetermined reception facility 30 by a sea route. The reception facility 30 includes, for example, a power transformer 31 and a power transmission cable 32. When the transportation ship 10 arrives near the reception facility 30, the DC electricity held by the storage battery is supplied to the power transformer 31 via a discharge cable. The power transformer 31 converts electricity from DC electricity to AC electricity, and transmits the electricity to a public power system 200 including a substation and the like.

In this way, in the present invention, basically electrical energy is transported from the offshore power generation facility 20 to the onshore reception facility 30 by the transportation ship 10 equipped with a storage battery, and eventually transported to the power system 200 (power transmission network). Although depending on the power source of the transportation ship 10, for example, even a motor-type transportation ship 10 using electricity as a power source can navigate approximately 300 to 500 km on the ocean without recharging. Therefore, the distance from the offshore power generation facility 20 to the onshore reception facility 30 can be approximately 300 to 500 km.

FIG. 2 illustrates the main components of the transportation ship 10. In particular, in this embodiment, the transportation ship 10 is of a motor type that uses electricity as a power source. However, the transportation ship 10 may be of an internal combustion engine type using fossil fuel as a power source, or may be of a hybrid type that uses both a motor and an internal combustion engine. Furthermore, the transportation ship 10 may be powered by hydrogen as a power source. For example, in a case of using hydrogen as a power source, the transportation ship 10 may be of a fuel cell type that drives a motor using electricity generated by a fuel cell, or the transportation ship 10 may be of a hydrogen engine type that obtains power by burning hydrogen by an internal combustion engine.

As illustrated in FIG. 2, the transportation ship 10 includes a container 10a and a hull 10b. The container 10a is configured to be removable from the hull 10b. In addition, the hull 10b is configured to be able to navigate independently even when the container 10a is removed.

The container 10a is an element for holding an energy source (specifically, electricity) to be transported from the power generation facility 20 to the reception facility 30. The electricity stored in the container 10a is intended for transportation from the power generation facility 20 to the reception facility 30, and thus during transportation, the electricity is basically held as is without being consumed as a power source for the transportation ship 10 and the equipment inside the ship. However, as will be described later, in an emergency or the like, the electricity stored in the container 10a may also be used as a power source for the transportation ship 10, or the like.

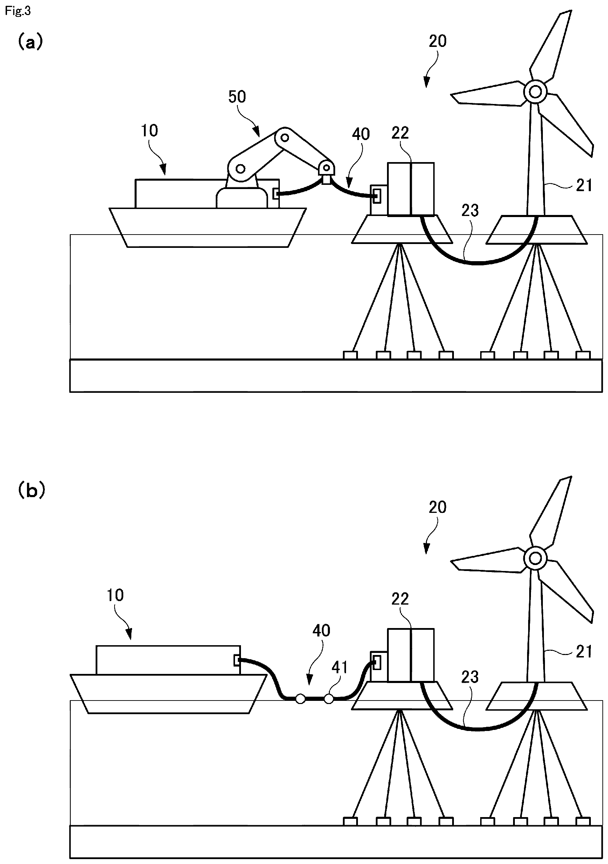

The container 10a includes a charging/discharging port 11, a plurality of battery cells 12, and a battery control device 13. The charging/discharging port 11, into which a charging/discharging cable 40 (see FIG. 3) is inserted, is an interface for charging and discharging each battery cell 12. The battery cells 12 are storage batteries installed within the container 10a. Depending on the number of battery cells 12 installed, the electrical capacity that can be stored in the container 10a of the transportation ship 10 can be adjusted. For example, depending on the size of the transportation ship 10, the container 10a is capable of securing an electrical capacity of 200 to 6000 MWh. The battery control device 13 is connected to each battery cell 12 and is a control circuit for controlling the amount of charge/discharge of electricity to each battery cell 12 and the rate of charge/discharge. The battery control device 13 includes, on a circuit board, a CPU, a memory for storing a control program, a communication device with an external server device, a sensor device for detecting a state of charge of the battery cells 12, and the like.

Note that in this embodiment, the container 10a is configured to be removable from the hull 10b, but it may also be configured such that each battery cell 12 is removable from the container 10a. On the other hand, in a case where each battery cell 12 is removably attached to the container 10a, the container 10a itself may be fixed to the hull 10b in a non-removable manner. Furthermore, in this embodiment, the battery control device 13 is installed inside the container 10a; however, instead of this configuration, the battery control device 13 may also be installed on the hull 10b side.

The hull 10b of the transportation ship 10 basically has the same configuration as a general motor-type ship using electricity as a power source. That is, the hull 10b includes a drive battery 14, an inverter 15, and a motor 16. The drive battery 14 holds electricity that is consumed as a power source for the transportation ship 10 and internal equipment. The inverter 15 controls or converts the electricity output from the drive battery 14 and supplies the electricity to the motor 16. The motor 16 converts the electricity received from the inverter 15 into power. For example, the motor 16 obtains the propulsion force for the transportation ship 10 by rotating a screw propeller through a shaft (not illustrated).

In this way, the hull 10b has the drive battery 14 separate from the battery cells 12 that stores electricity for transportation, and therefore navigating is possible without consuming the electricity in the battery cells 12. However, in this embodiment, the drive battery 14 is electrically connected to the battery cells 12 via the battery control device 13. Therefore, in an emergency or the like, electricity in the battery cells 12 may be supplied to the drive battery 14. As a result, the transportation ship 10 is also able to navigate using the electricity in the battery cells 12 as a power source.

In addition, although not illustrated, the transportation ship 10 may transport hydrogen instead of electricity as an energy source. In this case, a hydrogen tank may be installed in the container 10a instead of the battery cells 12. Moreover, the transportation ship 10 may be one that navigates using hydrogen as a power source. In this case, a fuel cell may be installed in the hull 10b instead of the drive battery 14. Note that hydrogen can be transported by the transportation ship 10 that uses electricity as a power source, and electricity can also be transported by the transportation ship 10 that uses hydrogen as a power source.

FIG. 3 schematically illustrates methods of supplying electricity from the power generation facility 20 to the battery cells 12 of the transportation ship 10. The supply of electric power from the power generation facility 20 to the transportation ship 10 is basically performed via the charging/discharging cable 40 while the transportation ship 10 remains at sea. When receiving the supply of electric power, the transportation ship 10 may be moored near the power generation facility 20 by lowering the anchor, or may be parked near the power generation facility 20 by controlling the motor and screw propeller without lowering the anchor. Note that the charging/discharging cable 40 may be provided on the transportation ship 10 or may be provided at the power generation facility 20. In addition, the supply of electric power from the power generation facility 20 to the transportation ship 10 is basically performed for the purpose of supplying electric power (stored in the battery cells 12) as an energy source to be transported to the reception facility 30. Note that it is also possible to supply electric power (electric power to be stored in the drive battery 14) from the power generation facility 20 to the transportation ship 10 as a power source to be consumed by the transportation ship 10; however, this is not the main purpose.

In the method illustrated in (a) of FIG. 3, the transportation ship 10 includes a robot arm 50 for suspending and gripping the charging/discharging cable 40. By gripping the charging/discharging cable 40 with the robot arm 50, the transportation ship 10 can be charged without the charging/discharging cable 40 touching the sea surface.

In addition, the robot arm 50 preferably includes a stabilizer mechanism for maintaining the spatial position (horizontal position and vertical position) of the gripped site of the charging/discharging cable 40 constant. The stabilizer mechanism may mechanically maintain the spatial position of the gripped site. Further, the stabilizer mechanism may be electronically controlled so as to maintain the spatial position of the gripped site based on detection information from a sensor device such as an acceleration sensor, a gyro sensor, or the like. The supply of electric power to the transportation ship 10 is performed at sea, and is easily affected by waves and tides. Therefore, by installing a stabilizer mechanism on the robot arm 50 of the transportation ship 10, it is possible to prevent the charging/discharging cable 40 from accidentally falling off from the charging/discharging port, or it is possible to prevent failure or disconnection of the charging/discharging cable 40 from occurring.

The method illustrated in (b) of FIG. 3 is simpler, and the supply of electric power from the power generation facility 20 to the transportation ship 10 is performed with the charging/discharging cable 40 floating on the sea surface or in the sea. In this case, there is no need to install the robot arm 50 on the transportation ship 10, and thus the manufacturing cost of the transportation ship 10 can be suppressed. Note that a float 41 may be attached to the charging/discharging cable 40 so that the charging/discharging cable 40 easily floats on the sea surface.

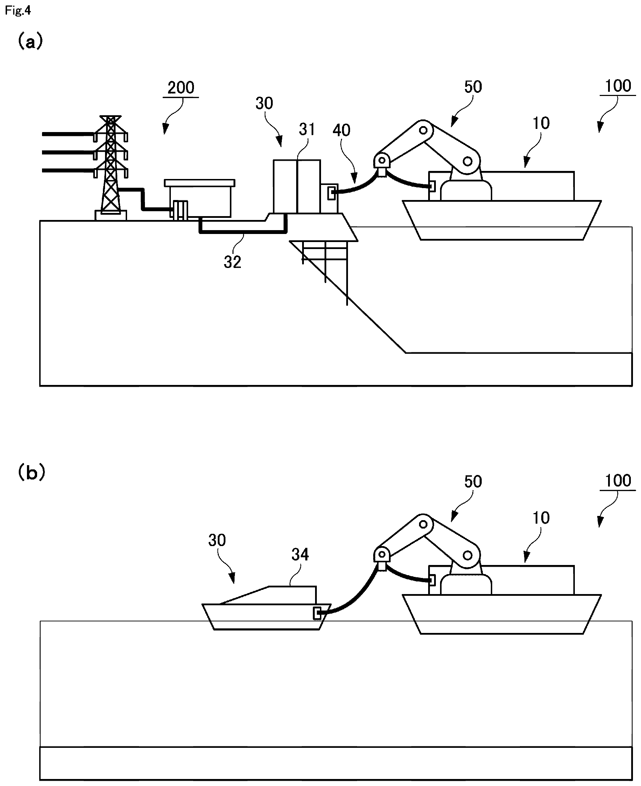

FIG. 4 schematically illustrates methods of supplying electricity from the transportation ship 10 to the reception facility 30. Basically, it is preferable that the supply of electric power from the transportation ship 10 to the reception facility 30 be performed via the charging/discharging cable 40 while the transportation ship 10 remains offshore. However, in a case of supplying electricity to the reception facility 30 that is onshore, when there is a port near the reception facility 30, the transportation ship 10 may be anchored at the port.

In the method illustrated in (a) of FIG. 4, the onshore power transformer 31 functions as the reception facility 30. The electricity stored in the battery cells 12 of the transportation ship 10 is supplied to the power transformer 31 that is onshore via the charging/discharging cable 40 gripped by the robot arm 50. Since DC electricity is stored in the battery cells 12, the power transformer 31 converts the DC electricity to AC electricity, and then transmits the AC electricity to the power system 200 via the power transmission cable 32. Note that although not illustrated, similar to the method illustrated in (b) of FIG. 3, it is also possible to supply electricity from the transportation ship 10 to the power transformer 31 without the robot arm 50 being installed on the transportation ship 10 and with the charging/discharging cable 40 floating on the sea surface.

In the method illustrated in (b) of FIG. 4, a ship 34 different from the transportation ship 10 functions as the reception facility 30. An example of the ship 34 is a motor-type ship that navigates using electricity as a power source. In this case, by supplying electricity to the ship 34 from the battery cells 12 installed on the transportation ship 10, the ship 34 is able to charge the drive battery while offshore. In this way, the supply destination of the energy source from the transportation ship 10 is not limited to the onshore power transformer 31 connected to the power system 200, but may also be a ship 34 that is offshore and that requires an energy source such as electricity.

In addition, although not illustrated, the supply destination of the energy source from the transportation ship 10 may be a vehicle (EV or FCV) that is onshore, and it is also possible to directly supply an energy source to various locations such as commercial facilities, hospitals, residences, and public transportation facilities. In this manner, with the present invention, it becomes possible to freely select a destination for transporting the energy source by the transportation ship 10.

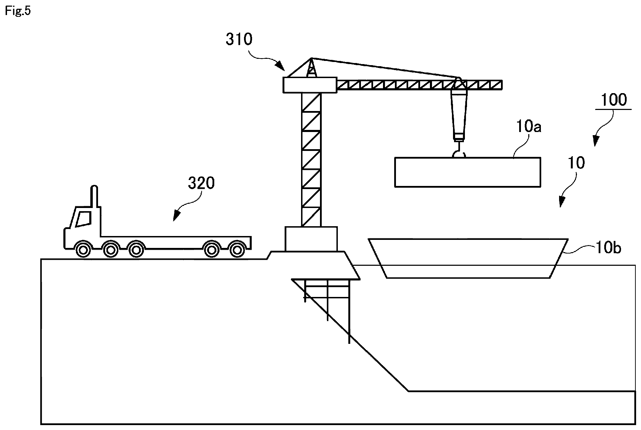

FIG. 5 illustrates a method for removing the container 10a from the transportation ship 10 and delivering the container 10a individually. As described above, the transportation ship 10 is configured such that the container 10a containing the battery cells 12 can be removed from the hull 10b. For this reason, for example, as illustrated in FIG. 5, after the transportation ship 10 is anchored at a port, the container 10a can be removed from the hull 10b by a crane 310, and the container 10a can be loaded onto a trailer 320. As a result, large-capacity containers 10a can be individually delivered to various regions and locations. For example, it is possible to freely deliver an energy source (electricity) to rural areas, to mountains and forests, to construction sites, and the like where power transmission lines are not installed. Note that the method for delivering the container 10a is not limited to the trailer 320, and other land transportation methods such as trains, air transportation methods such as helicopters and airplanes, and sea transportation methods such as cargo ships may also be used. It is also possible to unload and store the container 10a as is at a port as a backup power source.

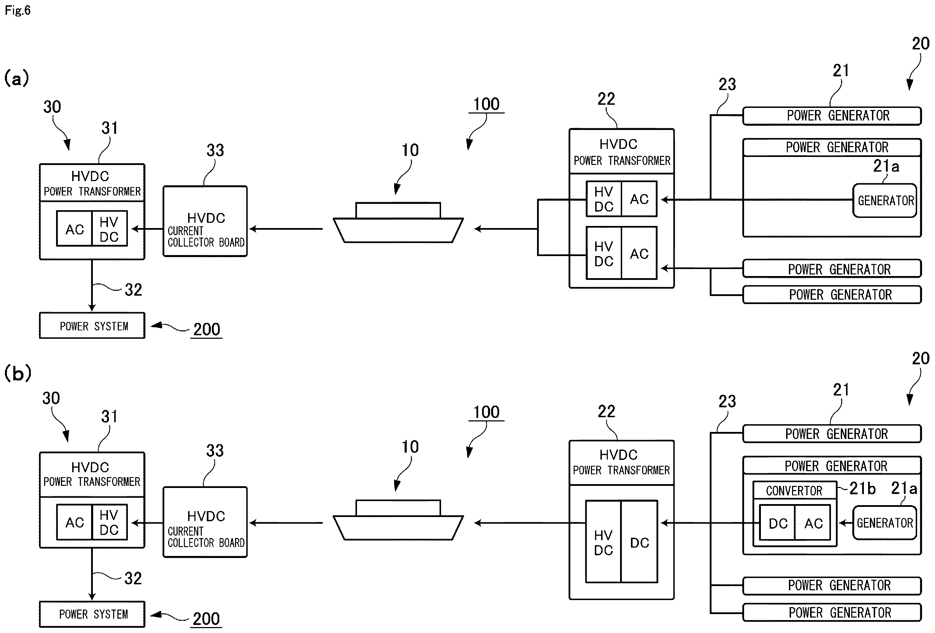

FIG. 6 illustrates two patterns of power transmission schemes assumed in the present invention. In the pattern illustrated in (a) of in FIG. 6, only a generator 21a is installed on the power generator 21 of the wind power generation facility 20, and no converter is installed. Therefore, AC electricity generated by the power generator 21 is converted into DC electricity by the power transformer 22. In addition, at this time, the power transformer 22 converts the electricity into high-voltage DC electricity (HVDC) of about 200 kV to 500 kV. This high-voltage DC electricity is then supplied from the power transformer 22 to the transportation ship 10. In this way, by charging the battery cells of the transportation ship 10 with high-voltage DC electricity, power loss during transportation can be suppressed.

Moreover, electric power is supplied from the transportation ship 10 to the reception facility 30 using high-voltage DC electricity. Therefore, it is necessary to provide a current collector board 33 and a power transformer 31 for high-voltage DC electricity on the reception facility 30 side as well. The electricity held by the battery cells of the transportation ship 10 is supplied to the power transformer 31 through the current collector board 33. The power transformer 31 converts high-voltage DC electricity into AC electricity of about 100V to 250V that meets the standards of each region, and then transmits the electricity to the power system 200 via the power transmission cable 32.

On the other hand, in the pattern illustrated in (b) of FIG. 6, the generator 21a and a converter 21b are installed on the power generator 21 of the wind power generation facility 20. Therefore, in each power generator 21, AC electricity generated by the generator 21a can be converted into DC electricity by the converter 21b. In this case, the power transformer 22 only performs a process of increasing the voltage of the DC electricity obtained from the power generator 21 to high voltage. Note that high-voltage DC electricity is supplied to the transportation ship 10 in the same manner as in the pattern illustrated in (a) of FIG. 6. In addition, the structure of the reception facility 30 is also the same as the pattern illustrated in (a) of FIG. 6.

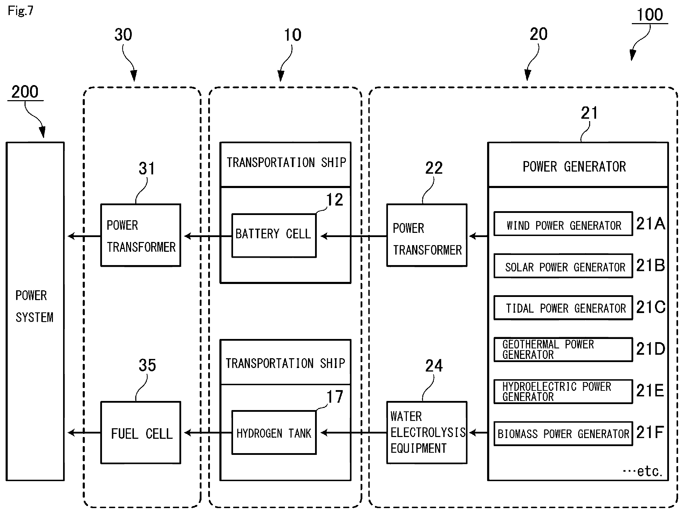

Next, an application example of an embodiment of the present invention described above will be explained with reference to FIG. 7. In the embodiment described above, the power generation facility 20 generates power using a wind power generator 21A. On the other hand, in the application example of FIG. 7, power generation methods using renewable energies such as, not only the wind power generator 21A, but also a solar power generator 21B, a tidal power generator 21C, a geothermal power generator 21D, a hydroelectric power generator 21E, and a biomass power generator 21F may be employed. In addition, a thermal power generator and a nuclear power generator can also be used. At the power generation facility 20, one type selected from among these types of power generators 21A to 21F or the like may be used for power generation, or a plurality of types of power generators may be combined and used for power generation. Note that, since each type of power generator is already well known, the detailed structure of each type of power generator will not be explained.

Moreover, in the embodiment described above, electricity is used as an energy source for transportation. That is, the transportation ship 10 on which the battery cells 12 are installed is charged with the electricity generated by the power generator 21, and the transportation ship 10 transports the electricity. For this reason, as in the transportation system illustrated in the upper part of FIG. 7, at the power generation facility 20, the electricity is converted from AC electricity to DC electricity by the power transformer 22, and then the battery cells 12 of the transportation ship 10 are charged with the electricity, and then even in reception facility 30 as well, the electricity supplied from the battery cells 12 is converted from DC electricity to AC electricity by the power transformer 31 and then transmitted to the power system 200.

On the other hand, in the application example of FIG. 7, hydrogen may also be used as an energy source for transportation. In this case, at the power generation facility 20, electricity generated by the power generator 21 is supplied to water electrolysis equipment 24. The water electrolysis equipment 24 electrolyzes water using electricity to generate high purity hydrogen gas. Hydrogen gas generated by the water electrolysis equipment 24 is supplied to the transportation ship 10 anchored or parked offshore via a hydrogen gas supply nozzle (supply line). The transportation ship 10 is provided with a hydrogen tank 17, and the hydrogen gas supplied from the water electrolysis equipment 24 is stored in the hydrogen tank 17. Note that the hydrogen gas supply line is preferably held by the robot arm 50 of the transportation ship 10, as in the example illustrated in (a) of FIG. 3.

When the filling of the hydrogen tank 17 is completed, the transportation ship 10 navigates toward the reception facility 30. In a case where hydrogen is used as an energy source for transportation, a fuel cell 35 is provided at the reception facility 30. Hydrogen gas is supplied to the fuel cell 35 from the hydrogen tank 17 of the transportation ship 10 via a supply nozzle (supply line). The fuel cell 35 generates electricity by causing a chemical reaction between hydrogen supplied from the transportation ship 10 and oxygen in the air. The electricity obtained by the fuel cell 35 is transformed as necessary and then transmitted to the power system 200. In this way, by transporting hydrogen by the transportation ship 10, the energy source obtained by the power generation facility 20 can be delivered to the reception facility 30.

The energy transportation system 100 according to the present invention may include either the electricity transportation system (upper example) or the hydrogen transport system (lower example) illustrated in FIG. 7, or may include both of these transportation systems. That is, it is possible to select and execute electricity transportation and hydrogen transportation as necessary.

As mentioned above, in this specification, in order to express the content of the present invention, embodiments of the present invention have been described with reference to the drawings. However, the present invention is not limited to the above-described embodiments, and includes modifications and improvements that are obvious to those skilled in the art based on the matters described in this specification.

### INDUSTRIAL APPLICABILITY

The present invention relates to an energy transportation system and an energy transportation method. For example, the present invention may be suitably used in the power generation business and the power transmission business.

### REFERENCE SIGNS LIST

- 10: Transportation ship
- 10a: Container
- 10b: Hull
- 11: Charging/discharging port
- 12: Battery cell
- 13: Battery control device
- 14: Drive battery
- 15: Inverter
- 16: Motor
- 17: Hydrogen tank
- 20: Power generation facility
- 21: Power generator
- 21a: Generator
- 21b: Converter
- 22: Power transformer
- 23: Array cable
- 24: Water electrolysis equipment
- 30: Reception facility
- 31: Power transformer
- 32: Power transmission cable
- 33: Current collector board
- 34: Ship
- 35: Fuel cell
- 40: Charging/discharging cable
- 41: Float
- 50: Robot arm
- 100: Energy transportation system
- 200: Power system
- 310: Crane
- 320: Trailer

## Claims

1. An energy transportation system comprising:
a transportation ship provided with holding means for holding an energy source;
a power generation facility located outside the transportation ship and configured to supply an energy source to the holding means; and
a reception facility located outside the transportation ship and configured to receive a supply of an energy source from the holding means.

2. The system according to claim 1, wherein the holding means is a storage battery.

3. The system according to claim 1, wherein the holding means is a hydrogen tank.

4. The system according to claim 1, wherein the power generation facility is located offshore.

5. The system according to claim 4, wherein the transportation ship at sea receives an energy source from the power generation facility via a cable.

6. The system according to claim 1, wherein the reception facility is located onshore.

7. The system according to claim 6, wherein the transportation ship at sea supplies an energy source to the reception facility via a cable.

8. The system according to claim 1, wherein the reception facility is a ship capable of navigating using an energy source supplied from the transportation ship as a power source.

9. The system according to claim 1, wherein the holding means is configured to be removable from the transportation ship.

10. An energy transportation method comprising transporting an energy source by a transportation ship provided with holding means for holding the energy source from a power generation facility outside the transportation ship to a reception facility outside the transportation ship.
